# EUROPÄISCHE PATENTSCHRIFT

(11) **EP 0 825 697 B1**
(45) Veröffentlichungstag und Bekanntmachung des Hinweises auf die Patenterteilung: **26.09.2001**
(21) Anmeldenummer: 96117955.3
(22) Anmeldetag: 08.11.1996
(51) Int. Cl.: H02B 1/30, F16B 13/06

(54) **Befestigung für Schaltschrankverkleidungen**
Fastening device for swicthgear cabinet covers
Dispositif de fixation pour des revêtements d'armoire de distribution

(30) Priorität: 16.08.1996 DE 29614146 U
(43) Veröffentlichungstag der Anmeldung: 25.02.1998
(73) Patentinhaber: ELEK GMBH, D-41470 Neuss (DE)
(72) Erfinder: Mrochen, Heinrich, D-41812 Erkelenz (DE); Obommer, Nikolaus, D-41517 Grevenbroich (DE)
(74) Vertreter: Palgen, Peter, Dr. Dipl.-Phys.

(56) Entgegenhaltungen:
- DE-A- 2 460 431
- DE-C- 19 525 851
- US-A- 3 505 921

## Beschreibung

Die Erfindung bezieht sich auf eine Befestigung der dem Oberbegriff des Anspruchs 1 entsprechenden Art.

Mit dem Ausdruck "Schaltschrank" soll jegliche Art von schrankartigen Gehäusen verstanden sein, die zur Aufnahme von elektrischen Schaltgeräten, Sammelschienen, Verteilern, Sicherungen und dergleichen üblich sind. Die Gehäuse sind quaderförmig ausgebildet, wobei in vielen Fällen ein Rahmengestell aus Hohlprofilen vorgesehen ist, welches die Kanten des Quaders bildet. Zumindest einige der Seitenflächen bestehen aus tafelförmigen Elementen mit abgewinkelten Rändern, zum Beispiel aus lackiertem Blech, die an den Rahmenholmen des Rahmengestells befestigt werden. Für diese Befestigung sind bisher Schrauben oder Vorreiber verwendet worden. Beide Arten der bekannten Befestigungen sind aufwendig sowohl was die Herstellung als auch was die Montage anlangt und im Falle von selbstschneidenden Schrauben für mehrfache Benutzung weniger geeignet.

Dokument DE 195 25 851 C (LOH KG RITTAL WERK) offenbart ein Verbindungselement zur Befestigung von Seitenwänden an einem Rahmengestell eines Schaltschrankes, bestehend aus Hohlprofilen. Hierfür wird die Befestigungsschraube für die Seitenwände durch ein mit einer Halteplatte versehenes Distanzstück geführt, so daß die den Endabschnitten der Anlagerahmen zugekehrten Stirnseiten der Halteplatten Metallklammern aufgesteckt sind, die sich mit Krallen an den zugekehrten Seiten der Endabschnitte und mit Endkrallen einer durch den Schlitz des Endabschnittes hindurch ragenden Federzunge an der Innenseite der angebrachten Seitenwand unter Federspannung abstützen.

In Dokument US 3505921 A wird ein Spreizelement eingeführt, welches durch eine Schraube zusammengezogen wird und dadurch zwei zu verbindende Platten aufeinanderpreßt.

Der Erfindung liegt die Aufgabe zugrunde, eine Befestigung der in Rede stehenden Art wirtschaftlicher herbeizuführen.

Diese Aufgabe wird durch die in Anspruch 1 wiedergegebene Erfindung gelöst.

Die erfindungsgemäße Befestigung bedarf keiner im vorhinein an dem tafelförmigen Element oder dem Rahmenholmen anzubringender Befestigungsteile. Es müssen dort lediglich fluchtende Lochungen vorhanden sein. Das Schraubelement ist ein in sich geschlossenes Bauteil, dessen Einzelteile praktisch nicht verloren gehen können und das in die Lochungen eingesetzt und rasch von vorn durch einige Schraubendrehungen betätigbar ist. Dabei ist die Abstandsbuchse in der Lochung des tafelförmigen Elements drehfest, so daß keine Maßnahmen getroffen sein müssen, um beim Anziehen der Schraube ein Mitdrehen der Abstandsbuchse zu verhindern.

Dies kann in der in Anspruch 2 wiedergegebenen Weise verwirklicht werden, insbesondere gemäß Anspruch 3.

Ein nicht kreisförmiger Querschnitt läßt sich in dem Profil des Rahmenholms mit dem gleichen Aufwand anbringen wie ein kreisförmiger Querschnitt, da in der Praxis die Lochungen nicht gebohrt, sondern gestanzt werden.

Damit die Haltekräfte am Rand der Lochung des tafelförmigen Elements auf einer größeren Fläche auf dieses übertragen werden, kann die Abstandsbuchse am äußeren Ende einen den Rand übergreifenden radialen Bund aufweisen (Anspruch 4). Die Übertragung der Kräfte erfolgt also an dem Bund, nicht unmittelbar durch die Schraube.

Wenn von "außen" die Rede ist, so ist dabei auf den Schrank Bezug genommen. "Außen" heißt also "bezüglich des Schrankes außen".

Da die tafelförmigen Elemente der Schaltschrankverkleidung in vielen Fällen aus lackiertem Blech bestehen und über einen Dichtstreifen, das heißt ein isolierendes Element an den Rahmenholmen anliegen, müssen Maßnahmen getroffen sein, um die Erdung der tafelförmigen Elemente zu gewährleisten.

Hierzu können die Erdungszähne an der Unterseite des Bundes gemäß Anspruch 5 dienen, die die Lackschicht an der Außenseite des tafelförmigen Elementes durchdringen und auf diese Weise über das Schraubelement eine galvanische Verbindung zwischen dem tafelförmigen Element und dem Rahmenholm herstellen.

Damit die Schraube und die Abstandsbuchse unverlierbar zusammenbleiben, auch wenn bei einem zwischenzeitlichen Entfernen des tafelförmigen Elements die Schraube aus der Spreizbuchse herausgedreht worden ist, empfiehlt sich ein Gewindegang nach Anspruch 6.

Der Radialbund an der Spreizbuchse (Anspruch 7) dient als Anschlag zum Abfangen der Spannkräfte der Schraube, die auf diese Weise zwischen dem Radialbund auf der Vorderseite der Lochung des Rahmenholms und den Spreizgliedern auf der Rückseite der Lochung des Rahmenholms wirken. Der Dichtstreifen, der zwischen der Stirnseite der Abwinklung des jeweiligen tafelförmigen Elements und der zugeordneten Anlagefläche des Rahmenholms angeordnet ist, bleibt von den Spannkräften des Schraubelements frei und erfährt lediglich eine durch die Abmessung der Abstandsbuchse vorbestimmte, vom Anzugsmoment der Schraube unabhängige Vorspannung.

Damit das Schraubelement bei einem späteren Abnehmen des tafelförmigen Elements etwa bei einer Wartung der Schaltelemente nicht verloren gehen kann, empfiehlt sich die Ausgestaltung nach Anspruch 8.

In der Zeichnung ist ein Ausführungsbeispiel der Erfindung dargestellt.
Figur 1 zeigt einen Horizontalschnitt durch den aufrechten Rahmenholm eines Schaltschrankes;
Figur 2 zeigt eine Teilansicht nach der Linie II-II, teilweise im Schnitt;
Figur 3 zeigt eine Ansicht der Teile des Schraubelements, teilweise im Schnitt.

Die Zeichnung entspricht etwa der doppelten natürlichen Größe der Teile in einem tatsächlichen Schaltschrank.

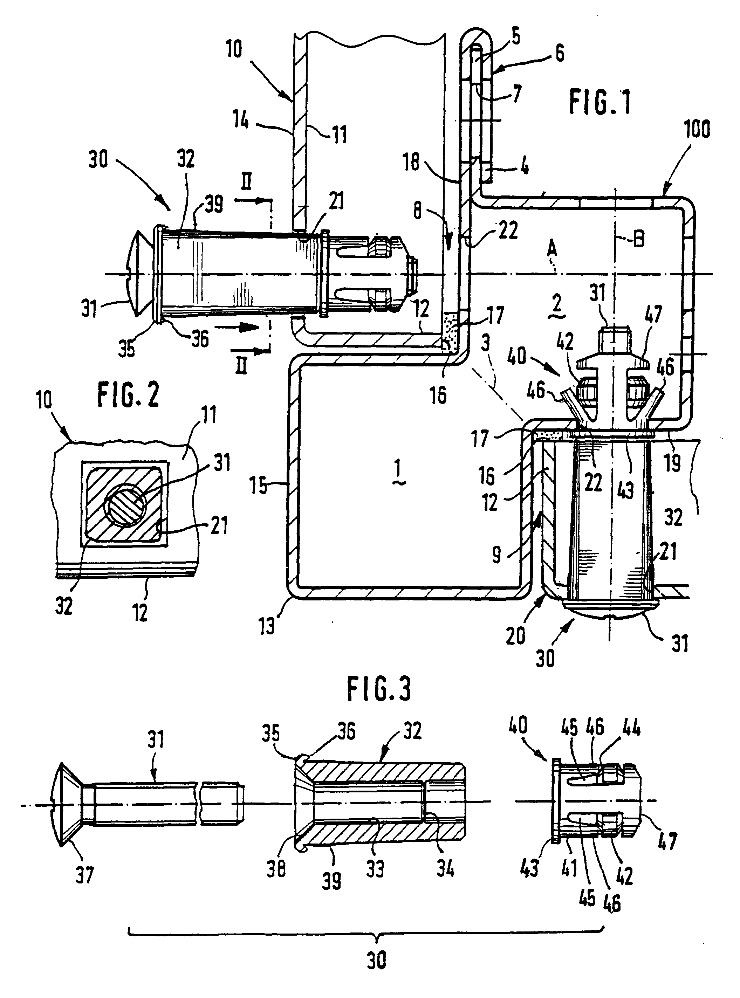

Der Schaltschrank besitzt ein Rahmengestell, von welchem in Figur 1 ein aufrechter Rahmenholm 100 wiedergegeben ist an welchem ein tafelförmiges Element 10 zur Abdeckung einer Seitenfläche des quaderförmigen Rahmengestells und ein dazu senkrecht verlaufendes tafelförmiges Element 20 zur Abdeckung der Rückseite des Rahmengestells zu befestigen sind. Das tafelförmige Element 10 umfaßt eine rechteckige ebene Blechtafel 11, die an den Rändern ringsum Abwinklungen 12 aufweist, die die Blechtafel 11 stabilisieren. Das tafelförmige Element 20 ist entsprechend aufgebaut. Die tafelförmigen Elemente 10, 20 sind lackiert oder pulverbeschichtet.

Der Rahmenholm 100 besteht aus einem Hohlprofil, welches in dem Ausführungsbeispiel durch Abkanten von Blech hergestellt ist. Der Rahmenholm 100 besitzt einen Querschnitt mit zwei etwa quadratischen, mit ihren Seiten einander parallelen, etwa gleich großen Profilkammern 1, 2, die seitlich und in Höhenrichtung versetzt zueinander derart angeordnet sind, daß sie sich an der benachbarten Ecke um etwa ein Viertel einer Seitenlänge überschneiden, so daß die Profilkammern 1, 2 in einer Zone 3 ineinander übergehen. Der eine Rand 4 des zu dem Profil des Rahmenholms 100 abgewinkelten Blechstreifens ist um den anderen Rand 5 in der als Figur 1 ersichtlichen Weise um 180° herumgefaltet, so daß sich das Profil schließt und außerdem ein Steg 6 zur Anbringung von Reihenlochungen 7 zur Befestigung von in dem Schaltschrank anzubringenden Elementen ergibt.

Die beschriebene Gestalt des Querschnitts des Rahmenholms 100 ergibt zwei rechtwinklige Falze 8, 9, in die die Ränder der tafelförmigen Elemente 10, 20 in der aus Figur 1 ersichtlichen Weise eingreifen. Die in Figur 1 linke untere Ecke 13 des Rahmenprofils 100 bildet eine rückwärtige Ecke des quaderförmigen Schaltschrankes.

Die Höhe der Abwinklungen 12 der tafelförmigen Elemente 10 und 20 ist den Abmessungen der Falze 8, 9 so angepaßt, daß, wenn die Außenseiten 14 der Blechtafel 11 und 15 des Rahmenprofils 100 miteinander fluchten, die Stirnseite 16 der Abwinklung 12 mit einem abdichtenden Druck gegen einen Dichtstreifen 17 anliegt, der auf der Anlagefläche 18 des Falzes 8 beziehungsweise 19 des Falzes 9 angebracht ist und rund um die dem Umriß des jeweiligen tafelförmigen Elements 10, 20 angepaßte Falzöffnung verläuft.

Die Befestigung der tafelförmigen Elemente 10, 20 in der gezeigten Position an dem Rahmenholm 100 erfolgt mittels Schraubelementen 30, die längs der Schraubachse A miteinander fluchtende Lochungen 21 in dem tafelförmigen Element 10 beziehungsweise 22 in der Anlagefläche 18 des Rahmenholms 100 durchgreifen. Entsprechendes gilt für das tafelförmige Element 20 und die Schraubachse B.

Das Schraubelement 30 besteht aus drei Teilen, nämlich einer normalen Linsenkopfschraube 31, einer Abstandsbuchse 32 und einer handelsüblichen Spreizbuchse 40, die in Figur 3 auseinandergezogen dargestellt sind, in der Praxis aber zusammengesetzt eine bauliche Einheit bilden, die als ganze gehandhabt wird, wie es in Figur 1 links oben erkennbar ist, wo das Schraubelement 30 noch nicht ganz im Sinne des Pfeiles eingeschoben dargestellt ist.

Die Abstandsbuchse 32 besteht aus Aluminium- oder Zinkdruckguß und weist eine mit einer Ansenkung 38 versehene Durchgangsöffnung 33 auf, in der ein einzelner Gewindegang 34 vorgesehen ist, in den die Kopfschraube 31 einschraubbar ist, um die Teile 31, 32 unverlierbar zusammenzuhalten. Der Senkkopf 37 der Kopfschraube 31 legt sich gegen die Ansenkung 38 der Abstandsbuchse 32, so daß ein Widerlager beim Anziehen der Kopfschraube 31 gebildet ist. An dem in der Einbaustellung äußeren, das heißt in Figur 3 linken Ende besitzt die Abstandsbuchse 32 einen radial vorspringenden Bund 35, der an seiner Unterseite, die im Einbauzustand an der Außenseite 14 des tafelförmigen Elements zur Anlage kommt, Erdungszähne 36 besitzt, die beim Anziehen der Kopfschraube 31 die auf der Außenfläche 14 befindliche Lackschicht durchbohren und einen galvanischen Kontakt zwischen dem Material des tafelförmigen Elements 10 und der Abstandsbuchse 32 beziehungsweise der Kopfschraube 31 herstellen.

Die Lochung 21 in der Blechtafel 11 des tafelförmigen Elements 10 ist nicht kreisrund, sondern quadratisch, wie aus Figur 2 zu ersehen ist. Dementsprechend ist auch der Außenumfang der Abstandsbuchse 32 nicht rund, sondern im Querschnitt quadratisch. Außerdem nimmt die Abstandsbuchse 32 gemäß Figur 3 von rechts nach links, das heißt nach außen hin, in ihrem Querschnitt leicht pyramidenförmig zu, so daß sich das Schraubelement 30 leicht einführen läßt.

An dem den größeren Querschnitt aufweisenden, d.h. dem Bund 35 benachbarten Ende weist die Abstandsbuchse 32 am Außenumfang eine Querschnittsvergrößerung 39 auf, die dazu führt, daß das Schraubelement 30 bei der Montage, d.h. beim Einschieben in die Lochung 21 gemäß Fig. 1 in Pfeilrichtung im letzten Teil der Einschiebstrecke mit einer gewissen Kraft, die aber noch ohne weiteres von Hand aufgebracht werden kann, angedrückt werden muß. Dadurch wird bei einer späteren Abnahme der tafelförmigen Elemente 10, 20 ein Herausfallen der Schraubelemente 30 aus den Lochungen 21 verhindert. Die Querschnittsvergrößerung 39 kann den gesamten Querschnitt betreffen, so daß das Querschnittsquadrat der Abstandsbuchse 32 größer wird, doch reicht für den angestrebten Zweck auch eine stellenweise Querschnittsvergrößerung, z.B. in Gestalt von flachen Noppen oder Auswölbungen auf den Seitenflächen der Abstandsbuchse 32 aus. Die Querschnittsvergrößerungen können auch so ausgebildet sein, daß die Schraubelemente beim Eindrücken regelrecht einschnappen. Das Schraubelement 30 sitzt also in ganz eingeführtem Zustand (wie in Figur 1 unten rechts dargestellt) unverdrehbar und unverlierbar in der quadratischen Lochung 21. Es kann ausreichen, die quadratische Querschnittsgestaltung der Abstandsbuchse 32 nur im äußeren, dem Bund 35 benachbarten Längenbereich der Abstandbuchse 32 vorzunehmen.

Die Spreizbuchse 40 ist ein handelsübliches Teil, welches ein Blechformteil 41 und eine Mutter 42 für die Kopfschraube 31 umfaßt. Das Blechformteil 41 hat einen im wesentlichen zylindrischen Außenumfang, der gerade in die kreisrunde Lochung 22 des Rahmenholms 100 paßt. An seinem äußeren, bei zusammengesetztem Schraubelement 30 der Abstandsbuchse 32 zugewandten Rand ist das Blechformteil 41 zu einem Radialbund 43 nach außen umgebördelt, der zwar glatt durch die Lochung 21 des tafelförmigen Elements 10 paßt, jedoch nicht durch die Lochung 22, sondern sich beim Einschieben des Schraubelements 30 von außen gegen den Rand der kreisförmigen Lochung 22 legt.

Die Mutter 42 ist in dem Blechformteil 41 undrehbar gehalten und besitzt an ihrer Außenseite eine konische Abschrägung 44. Durch achsparallele Einschnitte 45 sind an dem Blechformteil 41 gegen die Mutter 42 frei vorstehende Zungen 46 gebildet, deren innere, gemäß Figur 3 rechte Stirnseiten gegen die Konusfläche 44 der Mutter 42 anliegen. Auf der gegenüberliegenden Seite bildet das Blechformteil 41 einen die Mutter 42 überspannenden Kopfteil 47 mit einer zentralen Lochung, durch die die Kopfschraube 31 in der aus Figur 1 rechts unten ersichtlichen Weise hindurchtreten kann.

Zur Montage wird das Schraubelement 30 durch die Lochungen 21, 22 eingedrückt, bis der Bund 35 mit den Erdungszähnen 36 auf der Außenseite 14 des tafelförmigen Elements 10 anliegt. Sodann wird die Kopfschraube 31 angezogen, wobei die Abstandsbuchse 32 in der quadratischen Lochung 21 drehfest gehalten ist. Beim Anziehen der Kopfschraube 31 verlagert sich die Mutter 42 in der in Figur 1 bei dem tafelförmigen Element 20 dargestellten Weise nach unten und drückt dabei die Zungen 46 auseinander. Der Radialbund 43 liegt gegen den Rand der Lochung 22 in der Anlagefläche 19 von außen an, die Außenseite der Zungen 46 von innen. Da die Spreizbuchse 40 aus Metall besteht, ergibt sich an der Außenseite der Zungen 46 der Erdungskontakt zwischen dem tafelförmigen Element 20 und dem Rahmenholm 100. Entsprechend natürlich auch für das tafelförmige Element 10. Die Spannkraft läßt sich über das Anzugsmoment der Kopfschraube 31 bestimmen. Die innere Stirnseite 16 der Abwinklung des tafelförmigen Elements 20 liegt dichtend gegen den Dichtstreifen 17 an. Diese Anlage ist unabhängig davon, wie fest die Kopfschraube 31 angezogen wird. Sie ist durch die Länge der Abstandsbuchse 32 bestimmt.

Bei einer eventuellen Demontage verbleibt die Spreizbuchse 40 an Ort und Stelle. Die Befestigung kann beliebig oft wiederhergestellt werden.

Zur Herbeiführung der Befestigung bedarf es nur der Drehung der Kopfschraube 31 um einige Gewindegänge, nämlich soweit, daß die Mutter 42 ausreichend verlagert wird, um die Flügel 46 in der in Figur 1 ersichtlichen Weise auseinander zu drücken. Eine besondere Aufmerksamkeitszuwendung ist bei der Herstellung der Befestigung nicht erforderlich.

Die Befestigung steht nur um die Höhe des Bundes 35 und des Linsenkopfes der Kopfschraube 31 über die Außenfläche 14 über, also um einen Betrag, der recht gering gemacht werden kann, wie Figur 1 rechts unten erkennen läßt. Versuche haben ergeben, daß die Befestigung sich wesentlich günstiger realisieren läßt als die bisherigen Befestigungen. Eine Befestigungsstelle mit einer Schraube oder einem Vorreiber verursachte bisher Material- und Arbeitskosten in Höhe von DM 1,45, während sich eine erfindungsgemäße Befestigung zu einem Preis in der Größenordnung von DM 0,35 erstellen läßt.

## Patentansprüche

1. Befestigung einer Schaltschrankverkleidung an einem aus einem Hohlprofil gebildeten Rahmenholm (100) eines elektrischen Schaltschrankes,
wobei die Schaltschrankverkleidung aus einem an den Rändern abgewinkelten tafelförmigen Element (10, 20) besteht, das mit den Abwinklungen gegen eine Anlagefläche (18, 19) des jeweiligen Rahmenholms (100) gerichtet und mittels mindestens eines senkrecht zur Tafelfläche (14) nahe deren Rand angeordnete fluchtende Lochungen (21, 22) des tafelförmigen Elements (10, 20) und der Anlagefläche (18, 19) des Rahmenholms (100) durchgreifenden Schraubelements (30) an dem Rahmenholm (100) befestigt ist,
**dadurch gekennzeichnet**,
daß das Schraubelement (30) eine Abstandsbuchse (32) und eine Spreizbuchse (40) sowie eine die Abstandsbuchse (32) durchgreifende und in ein Gewinde der Spreizbuchse (40) eingreifende Kopfschraube (31) umfaßt,
daß die Abstandsbuchse (32) eine der Höhe der Abwinklung (12) entsprechende Länge aufweist und bei ganz eingeführtem Schraubelement (30) drehgesichert in der Lochung (21) des tafelförmigen Elements (10, 20) sitzt,
und daß die Spreizbuchse (40) durch die Lochungen (21, 22) in das Innere des Rahmenholms (100) einführbar und dort durch Anziehen der Kopfschraube (31) unter Hintergreifen des Randes der Lochung (22) des Rahmenholms (100) aufspreizbar ist.

2. Befestigung nach Anspruch 1 **dadurch gekennzeichnet, daß** die Abstandsbuchse (32) zumindest am äußeren Ende an ihrem Umfang einen von der Kreisform abweichenden Querschnitt aufweist, der zu dem Querschnitt der Lochung (21) in dem tafelförmigen Element (10, 20) komplementär ist.

3. Befestigung nach Anspruch 2, **dadurch gekennzeichnet, daß** die Querschnitte quadratisch sind.

4. Befestigung nach einem der Ansprüche 1 bis 3, **dadurch gekennzeichnet, daß** die Abstandsbuchse (32) am äußeren Ende einen den Rand der Lochung (21) in dem tafelförmigen Element (10, 20) übergreifenden radialen Bund (35) aufweist.

5. Befestigung nach Anspruch 4, **dadurch gekennzeichnet, daß** an der am Rand der Lochung (21) zur Auflage kommenden Unterseite des Bundes (35) Erdungszähne (36) vorgesehen sind.

6. Befestigung nach einem der Ansprüche 1 bis 5, **dadurch gekennzeichnet, daß** die Abstandsbuchse (32) eine Durchgangsöffnung (33) mit mindestens einem in das Gewinde der Kopfschraube (31) eingreifenden Gewindegang (34) aufweist.

7. Befestigung nach einem der Ansprüche 1 bis 6, **dadurch gekennzeichnet, daß** die Spreizbuchse (40) an ihrem äußeren Ende einen sich gegen den äußeren Rand der Lochung (22) des Rahmenholms (100) legenden Radialbund (43) aufweist.

8. Befestigung nach einem der Ansprüche 1 bis 7,
**dadurch gekennzeichnet, daß** die Abstandsbuchse (32) auf ihrem Außenumfang eine Querschnittsvergrößerung (39) aufweist, durch die das Einschieben des Schraubelements (30) am Ende der Einschubstrecke gegen eine gewisse, von Hand aufbringbare Kraft zu erfolgen hat und das Schraubelement (30) nach dem ersten Einschieben unverlierbar in der Lochung (21) sitzt.

## Claims

1. Fastening of a switchgear cabinet cover on a frame rail (100), formed from a hollow section, of an electric switchgear cabinet, the switchgear cabinet cover comprising a panel-like element (10, 20) folded back at the edges, with the resulting flanges directed towards an engaging face (18, 19) of the respective frame rail (100) and being secured to the frame rail (100) by means of at least one screw element (30) perpendicular to the panel face (14) passing through aligned holes (21, 22) arranged near its edge in the panel-like element (10, 20) and the engaging face (18, 19) of the frame rail (100),
**characterised in that**
the screw element (30) includes a spacer bush (32) and a spreader bush (40) as well as a headed screw (31) passing through the spacer bush (32) and engaging in a screw thread in the spreader bush(40),
that the spacer bush (32) has a length corresponding to the height of the flange (12) and with the screw element (30) fully inserted is seated, secured against rotation, in the hole (21) in the panel-like element (10, 20),
and that the spreader bush (40) can be inserted through the holes (21, 22) into the inside of the frame rail (100) and there, by a tightening of the headed screw (31), is caused to spread out and engage under the rim of the hole (22 ) in the frame rail (100).

2. Fastening according to Claim 1 **characterised in that** the spacer bush (32) has at its periphery, at least at its outer end, a cross-section departing from the round shape and complementary to the cross-section of the hole (21) in the panel-like element (10, 20).

3. Fastening according to Claim 2, **characterised in that** the cross-section is square.

4. Fastening according to one of Claims 1 to 3, **characterised in that** the spacer bush (52) has at its outer end a radial collar (35) engaging over the rim of the hole (21) in the panel-like element (10, 20).

5. Fastening according to Claim 4, **characterised in that** earthing teeth (36) are provided on the underside of the collar (35), coming into engagement with the rim of the hole (21).

6. Fastening according to one of Claims 1 to 5, **characterised in that** the spacer bush (32) has an opening (33) with at least one screw threaded turn (34) engaging the screw thread of the headed screw (31).

7. Fastening according to one of Claims 1 to 6, **characterised in that** the spreader bush (40) has on its outer end a radial collar (43) bearing against the outer rim of the hole (22 ) in the frame rail (100).

8. Fastening according to one of Claims 1 to 7, **characterised in that** the spacer bush (32) has on its outer periphery an enlarged cross-section (39) as a result of which the insertion of the screw element (30), at the end of the insertion travel, has to take place against a certain degree of force capable of being applied by hand and the screw element (30) is then seated irremovably in the hole (21) following its first insertion.

## Revendications

1. Fixation d'un habillage d'armoire de branchement au montant de cadre (100) formé à partir d'un profilé creux, pour une armoire électrique, l'habillage de l'armoire étant réalisé au moyen d' un élément en forme de tableau (10, 20), dont les bords sont repliés et une surface de fixation (18, 19) de chaque montant de cadre (100), et un appui contre fixé sur le montant du cadre (100) au moyen d'au moins un élément à visser (30) disposé perpendiculairement à la surface de tableau (14) et traversant des orifices (21, 22) alignés aux bords de cette surface, dans l'élément en forme de plaque (10, 20) et dans la surface de fixation (18, 19) du montant de cadre (100),
**caractérisée en ce que**,
l'élément à visser (30) comprend une douille d'écartement (32), une douille à expansion (40) et une vis à tête (31) traversant la douille d'écartement (32) et s'insérant dans un pas de vis de la douille à expansion (40),
la douille d'écartement (32) a une longueur correspondant à la hauteur bord replié (12) et, lorsque l'élément à visser (30) est arrivé à fond de vissage, elle est serrée à l'intérieur de l'orifice (21) de l'élément en forme de plaque (10, 20), avec impossibilité de tourner, et la douille à expansion (40) peut être introduite dans les orifices (21, 22) dans le montant de cadre (100) et peut être élargie à cet endroit par vissage de la vis à tête (31) en s'accrochant sur le rebord de l'orifice (22) du montant de cadre (100).

2. Fixation suivant la revendication 1,
**caractérisée en ce que**
la douille d'écartement (32), au moins à son extrémité externe, présente sur son pourtour une section différente de la forme circulaire, et complémentaire de la section de l'orifice (21) dans l'élément en forme de tableau (10, 20).

3. Fixation suivant la revendication 2,
**caractérisée en ce que**
les sections sont carrées.

4. Fixation suivant l'une des revendications 1 à 3,
**caractérisée en ce que**
la douille d'écartement (32) comporte à son extrémité extérieure, une collerette radiale (35) accrochant le rebord de l'orifice (21) dans l'élément en forme de tableau (10, 20).

5. Fixation suivant la revendication 4,
**caractérisée en ce que**
des dents de mise à la terre (36) sont prévues sur la face inférieure de la collerette (35) venant en appui au bord de l'orifice (21).

6. Fixation suivant l'une des revendications 1 à 5,
**caractérisée en ce que**
la douille d'écartement (32) comporte un orifice de passage (33) avec au moins un filetage (34) venant en prise avec le filetage de la vis à tête (31).

7. Fixation suivant l'une des revendication 1 à 6,
**caractérisée en ce que**
la douille à expansion (40) comporte à son extrémité extérieure une collerette radiale (43) disposée contre le bord externe de l'orifice (22) du montant de cadre (100).

8. Fixation suivant l'une des revendications 1 à 7,
**caractérisée en ce que**
la section de la douille d'écartement (32) comporte sur sa surface extérieure un agrandissement de section (39) au travers de laquelle s'effectue l'introduction de l'élément à visser (30) à l'extrémité de la course d'introduction, contre une certaine force exercée à la main, puis l'élément à visser (30) est fixé d'une façon imperdable dans l'orifice (21) à la suite de la première introduction.
